## Europäisches Patentamt

## European Patent Office

## Office européen des brevets

(11) Veröffentlichungsnummer: **0 049 831**
**B1**

(12) **EUROPÄISCHE PATENTSCHRIFT**

(45) Veröffentlichungstag der Patentschrift:
19.09.84

(51) Int. Cl.³: **C 08 H 5/02,** D 21 C 11/00,
C 07 G 1/00

(21) Anmeldenummer: 81107849.2

(22) Anmeldetag: 02.10.81

(54) Verfahren zur Ausfällung von Ligninsulfonaten aus Sulfitablaugen.

(30) Priorität: 10.10.80 DE 3038241

(43) Veröffentlichungstag der Anmeldung:
21.04.82 Patentblatt 82/16

(45) Bekanntmachung des Hinweises auf die Patenterteilung:
19.09.84 Patentblatt 84/38

(84) Benannte Vertragsstaaten:
AT CH LI SE

(56) Entgegenhaltungen:
DE - A - 1 570 363
DE - B - 1 222 502
US - A - 2 710 255

HOLZFORSCHUNG, Band 35, Heft 2, 1981, Seiten 59-65
A. HAARS et al.: "Quantitative determination of lignosulfonates from sulfite spend liquors using precipitation with polyethyleneimine"
Chem. Abs. Vol. 79 1973 No. 55113a
Chem. Abs. Vol. 92 1980 No. 24548k
Liebig's Ann Chem. 1976, S. 1421-1434

(73) Patentinhaber: Gesellschaft für Biotechnologische Forschung mbH (GBF), Mascheroder Weg 1,
D-3300 Braunschweig-Stöckheim (DE)

(72) Erfinder: Haars, Annegret, Dr. rer. nat.,
Theodor-Heuss-Strasse 8, D-3400 Göttingen (DE)
Erfinder: Hüttermann, Aloys, Prof. Dr. rer. nat.,
Henri-Dunant-Strasse 20, D-3400 Göttingen (DE)

(74) Vertreter: Patentanwälte Dipl.-Ing. Rudolf Bibrach
Dipl.-Ing. Elmar Rehberg, Pütterweg 6 Postfach 738,
D-3400 Göttingen (DE)

## Beschreibung

Die Erfindung bezieht sich auf ein Verfahren zur Ausfällung von Ligninsulfonaten aus Sulfitablaugen, indem durch Zugabe von Polykationen ein Fällungskomplex entsteht.

Aus Chemical Abstracts 1976, Vol. 85, Seite 287 Nr. 181960 ist es bekannt, Ligninsulfonat aus Sulfitablauge durch Zusatz von quaternären Ammoniumsalzen, z. B. Poly (N-N-dimethylsylylen ammonium chlorid) zu fällen. Dabei entsteht ein wasserunlöslicher Niederschlag, für den keine Verwendung angegeben wird. Es ist weder eine Rückgewinnung des Fällungsmittels beschrieben, noch eine Isolierung des reinen Ligninsulfonates. Die Anwendung dieses Verfahrens verbietet sich aus Kostengründen wegen des teuren Fällungsmittels.

Aus der DE-AS 1 570 363 ist ein Verfahren zur Herstellung von vorzugsweise wasserlöslichen Reaktionsprodukten von Polyäthylenimin und Lignin bekannt. Dabei wird das Polyäthylenimin dem Lignin zugesetzt, wobei jedoch ein wasserlösliches Produkt angestrebt wird. Das vorbekannte Verfahren geht von Lignin aus, welches als Produkt beim Sulfatprozeß entsteht, also wasserunlöslich ist.

Aus Chemical Abstracts, Band 92, 1980, Nr. 24548k ist es bekannt, Polyäthylenimin in Verbindung mit Formaldehyd-Harnstoff als Copolymer einzusetzen. Die dort beschriebene Fällung wird mit drei verschiedenen Komponenten durchgeführt und läuft nach einem anderen Prinzip ab.

Bei den nach dem Sulfitverfahren arbeitenden Zellstoffwerken fällt ungefähr nur die Hälfte des eingesetzten Holzes in Form von Zellstoff an, während der Rest als wäßrige Kochsäure (fälschlich Sulfitablauge genannt) auftritt. In der BRD werden jährlich etwa 400 000 t Lignin beim Holzaufschluß gelöst. Auf 1 t atro Zellstoff rechnet man im Durchschnitt mit etwa 10 m³ Sulfitablauge (konzentrierte Lauge und Spüllaugen). Der größte Teil dieser Ablaugen fließt in den Vorfluter, d. g. in öffentlichen Bäche oder Flüsse, ungenutzt ab und verursacht eine beträchtliche Abwasserbelastung. Das Ligninsulfonat der Kocherablauge enthält fast die gesamte CSB-Fracht von 410 kg $O_2$/t atro Zellstoff. Der $BSB_5$, der bisher die Basis der behördlichen Auflagen im Wasserabgabegesetz bildete, liegt dagegen mit 76 kg $O_2$/t zwar niedriger, trotzdem ist eine teure kombinierte physikalische, chemische und biologische Abwasserbehandlung erforderlich, um die Belastung auf den in den gesetzlichen Richtlinien für Industrieabwässer vorgeschriebenen maximalen $BSB_5$ von 30—50 mg $O_2$/l im 24 h Durchschnitt zu senken. Mit der Verabschiedung der 4. Novelle zum Wasserhaushaltsgesetz tritt jedoch für Sulfitzellstoffabriken eine noch weiterreichende Erschwerung der Abwassersituation dadurch ein, daß künftig nicht mehr der BSB, sondern der CSB Grundlage der Berechnungen bildet.

Aus diesen Gründen wurden bereits 1966 von ingesamt 294 585 t atro Sulfitablauge 257 631 t verbrannt ( ≙ 87%, Jahresbericht der Zellstoff- und Papierindustrie, 1966). Nach dem derzeitigen Stand der Technik ist es möglich, etwa 98% der Gesamtbelastungsfracht einer Sulfitzellstoffanlage zu erfassen und einer Eindampfanlage zuzuführen. Bei diesem Prozeß wird die organische Substanz in korrosionsfesten Verdampfern von einer 10—15%igen Lösung auf eine 50—60%ige konzentriert. Dabei werden jedoch flüchtige Substanzen mitverdampft. Die Brüdenkondensate sind entsprechend verunreinigt und bewirken eine Rückbelastung dieses Abwasserteilstromes. Diese Rückbelastung beträgt unter guten Betriebsbedingungen etwa 8—18% der Kocherurbelastung. Abgesehen davon, daß Eindampfkondensate also gewissermaßen ein Folgeproblem der entlasteten Urlauge darstellen, ist die Energiebilanz des Verbrennungsprozesses nicht günstig: 20—50% der Energie, die beim Verbrennen der festen Sulfitablauge zurückgewonnen werden, werden durch den Eindampfprozeß verbraucht.

Bei dem in der BRD hauptsächlich zur Ausführung kommenden Ca-Sulfit-Verfahren führt ein Verbrennen der Ablauge nicht zu einer Laugenregeneration, der gesamte Schwefel fällt dabei als Asche, also $CaSO_4$ (Gips) an. Bei dem modernen Mg-Sulfit-Verfahren verläuft die Laugenregeneration immerhin so, daß 80% des Mg und 70% des Schwefels zurückgewonnen werden können. Alle anderen Verfahren zur Beseitigung und Verwertung von Sulfitablaugen, wie

a) Vergären der in der Ablauge enthaltenen Zucker (Hexosen) zu Äthylalkohol
b) Vergären der Pentosen + Hexosen zu eiweißhaltigen Hefen für Nähr- und Futtermittel
c) Vergären zu Butanol + Aceton durch butylogene Bakterien
d) Erzeugung von Furfurol durch Hydrolyse der Pentosane bei höheren Temperaturen
e) Oxidieren des Ligninsulfonates der Ablaugen in alkalischer Lösung zu Vanillin
f) Reinigen (s. u.) der konzentrierten Sulfitablauge und Verwendung von Ligninsulfonat als Zusatzstoff für Waschmittel, Gerbstoffe und in der Spanplattenindustrie
g) Fällung der Sulfitablauge mit gebranntem Kalk im 3-Stufen-Verfahren, wobei zum Schluß ein pH von 12 einzuhalten ist (Marathon-Verfahren, C. G. Howard).

sind entweder unwirtschaftlich (a—g), überhaupt noch nicht großtechnisch eingesetzt (c + g) oder kommen nur für einen winzigen Prozentsatz der anfallenden Sulfitablauge in Betracht (e).

Für die Gewinnung von reinem Ligninsulfonat, wie es z. B. im Verfahren f gefordert wird, gibt es bislang nur teure, aufwendige Möglichkeiten, die teilweise nicht großtechnisch anwendbar sind, wie z. B.:

a) Ultrafiltration
b) Dialyse
c) Elektrophorese
d) Ionenausschluß
e) Fällung der Ligninsulfonatsalze in Alkohol
f) Fällung von hochmolekularem Ligninsulfonat mit Aminen wie 4,4'-bis(p-dimethylaminodiphenyl)methan
g) Extraktion der Ligninsulfonsäuren mit langkettigen aliphatischen Aminen in Amylalkohol oder mit Trioktylamin in Chloroform
h) Fällung mit verschiedenen langkettigen, substituierten quaternären Ammoniumsalzen
i) Adsorption von Ligninsulfonaten an Chitin aus Krabben (US-PS 2 297 676).

Der Erfindung liegt die Aufgabe zugrunde, ein Verfahren der eingangs beschriebenen Art derart weiterzubilden, daß das Fällungsmittel regeneriert werden kann und damit für die Wiederverwendung zur Verfügung steht. Damit zielt das Verfahren auch darauf ab, das Ligninsulfonat als reines konzentriertes Produkt zu gewinnen.

Erfindungsgemäß wird dies dadurch erreicht, daß man als Polykationen Polyimine mit einer geringeren Polarität als Polyäthylenimin einsetzt, den so erhaltenen Fällungskomplex in Alkali löst und das Polyimin durch Extraktion mit organischen Lösungsmitteln zurückgewinnt. Die Erfindung geht dabei von dem Gedanken aus, daß das Ligninsulfonat der Sulfitablauge mit einem ganz bestimmten Polykation, nämlich einem Polyimin spezifisch und quantitativ ausgefällt wird. Der so hergestellte, salzartige Fällungskomplex setzt sich innerhalb kurzer Zeit als kompakter Niederschlag ab, der vom Überstand durch Dekantieren und vom Restwasser durch Pressen oder Zentrifugieren befreit werden kann. Das erfindungsgemäße Verfahren besitzt eine Vielzahl von Vorteilen. So kann die Sulfitablauge, so wie sie aus dem Kocher abgelassen wird, ohne weitere Vorbehandlung, z. B. Eindicken, eingesetzt werden. Die Fällung ist weiterhin spezifisch für Ligninsulfonat, so daß nach dem Zurückführen des Polyimins zwecks Widerverwendung das Ligninsulfonat als reines Produkt anfällt. Die Fällung des Ligninsulfonates ist bei den meisten Sulfitablaugen quantitativ, so daß der COD-Gehalt des Überstandes im Vergleich zur Ausgangslösung stark herabgesetzt ist. Das Fällungsmittel braucht nicht, wie sonst üblich, im Überschuß angewendet zu werden, so daß die überstehende Lösung einen pH-Wert von etwa 8 hat, der für den weiteren biologischen Abbau geeignet ist. Das Verfahren ist darüber hinaus für viele Sulfitablaugen anwendbar, da die Fällung unabhängig von der Art des verwendeten Holzes (Buche oder Fichte) und vom Aufschlußverfahren (z. B. Ca- oder Mg-Bisulfitverfahren) ist. Das Verfahren ist preiswert, da das Polyimin quantitativ zurückgewonnen werden kann. Das Ligninsulfonat fällt schließlich in so konzentrierter Form an, daß es direkt ohne weitere Konzentration in dem Verbrennungsprozeß oder zu anderen Zwecken eingesetzt werden kann. Das gesamte Fällungsverfahren wird ohne Energiezufuhr durchgeführt.

Als Polyimine können z. B. Polypropylenimin und/oder höhere homologe Polyimine eingesetzt werden. Da das Polyimin nicht im Überschuß eingesetzt wird, ergibt sich der Vorteil, daß es auch im Überstand nicht vorhanden ist. Damit läßt sich der Überstand sinnvoll weiterverarbeiten.

Der Niederschlag kann in alkalischen, wäßrigen Lösungen z. B. in Natronlauge, Kaliumhydroxyd, Kalziumhydroxyd aufgelöst werden. Die alkalische Lösung wird dann mit einem organischen Lösungsmittel nach dem Prinzip der Flüssig-Flüssig-Extraktion extrahiert. Dabei tritt das Polyimin in die organische Phase, das Ligninsulfonat in die wäßrige Phase ein. Als organische Lösungsmittel können z. B. Chloroform, Dichlormethan, Dichlorbenzol, eingesetzt werden.

Für die Rückgewinnung des Polyimins gibt es mehrere Möglichkeiten. Beispielsweise ist es möglich, daß das im organischen Lösungsmittel gelöste Polyimin durch Verdampfen des Lösungsmittels zurückgewonnen wird. Es ist aber auch möglich, daß das im organischen Lösungsmittel gelöste Polyimin durch Extraktion nach dem Prinzip der Flüssig-Flüssig-Extraktion mit einer sauren wäßrigen Lösung zurückgewonnen wird. Das Polyimin kann dann in wäßriger Lösung zur Fällung direkt eingesetzt werden.

Der Überstand über dem Fällungskomplex wird zur Verhefung, Vergärung oder Erzeugung von Einzelproteinen eingesetzt.

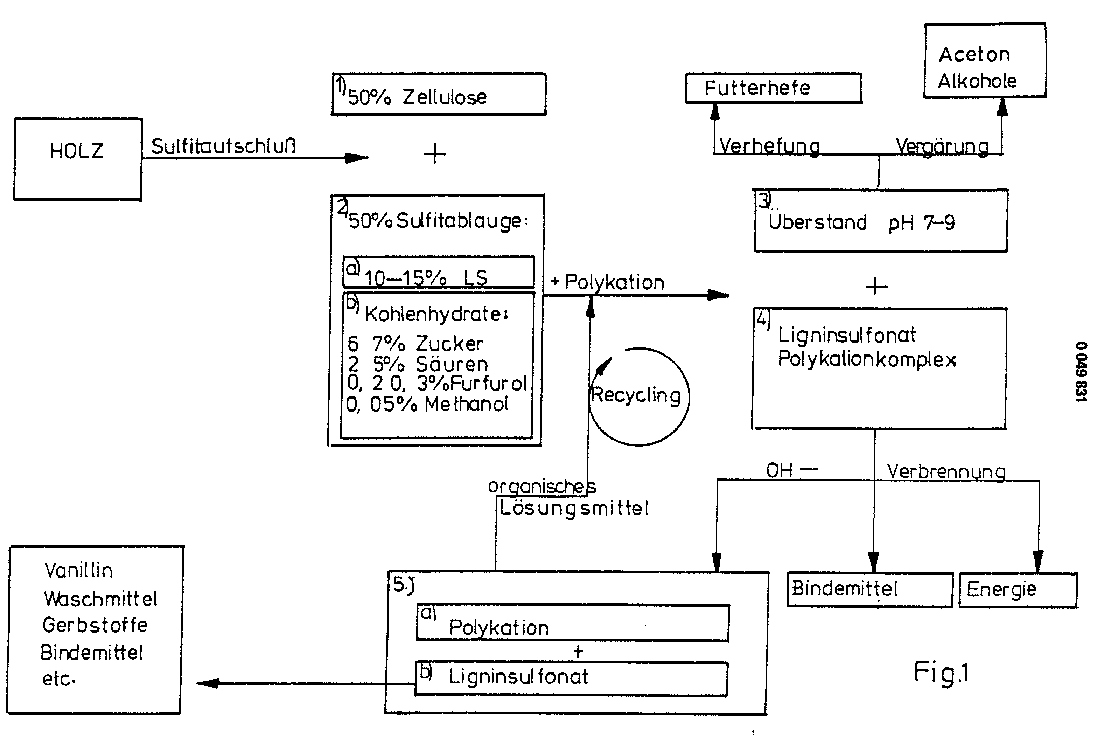

Wie ersichtlich, kann damit der Fällungskomplex vielfältigen Verwendungsmöglichkeiten zugeführt werden, wie dies aus Fig. 1 entnehmbar ist:

a) Der Fällungskomplex wird durch Alkali gelöst und das Polykation durch Extraktion mit organischen Lösungsmitteln zurückgewonnen. Das so in reiner Form erhaltene Alkali-Ligninsulfonat kann den bereits beschriebenen Verwendungsmöglichkeiten zugeführt werden oder auch zur enzymatischen Verklebung von Spanplatten dienen.
b) Der Fällungskomplex wird nicht gelöst, sondern als solcher verwendet, wobei die Möglichkeit des Einsatzes bei der Herstellung von Spanplatten besteht.
c) Außerdem kann der Fällungskomplex verbrannt werden, wenn die anfallende Menge Ligninsulfonat die Summe der wirtschaftlichen Verwendungsmöglichkeiten übersteigt.

Nachstehende Beispiele der Fällung von Ligninsulfonat aus verschiedenen Sulfitablaugen dienen dem Verständnis des Verfahrens und der damit erreichten Vorteile:

### 1. Fällung von verschiedenen Ligninsulfonaten mit Polypropylenimin (PPI)

5%ige wäßrige Lösungen verschiedener technischer Ligninsulfonate ( = Polyanionen), die mit HCl auf pH 3.0 eingestellt worden waren, wurden bei Raumtemperatur unter Schütteln mit einer 3,6%igen wäßrigen Lösung von Polypropylenimin ( = Polykation) ausgefällt. Die Niederschläge ( = Symplexe) wurden nach dem Absetzen 60 min bei 200 × g zentrifugiert, wonach ihr Wassergehalt 60% betrug (festgestellt durch Trocknung über CaCl₂ bis zur Gewichtskonstanz). Nach Dekantieren der Überstände wurde in diesen der pH ermittelt und außerdem, nach Verdünnung 1 : 1000 mit bidestilliertem Wasser, die optische Dichte bei 280 nm gemessen. Ligninsulfonate haben ein charakteristisches Absorptionsmaximum bei 280 nm, daher wird diese Wellenlänge allgemein zur Bestimmung des Ligninsulfonatgehaltes in Lösungen herangezogen.

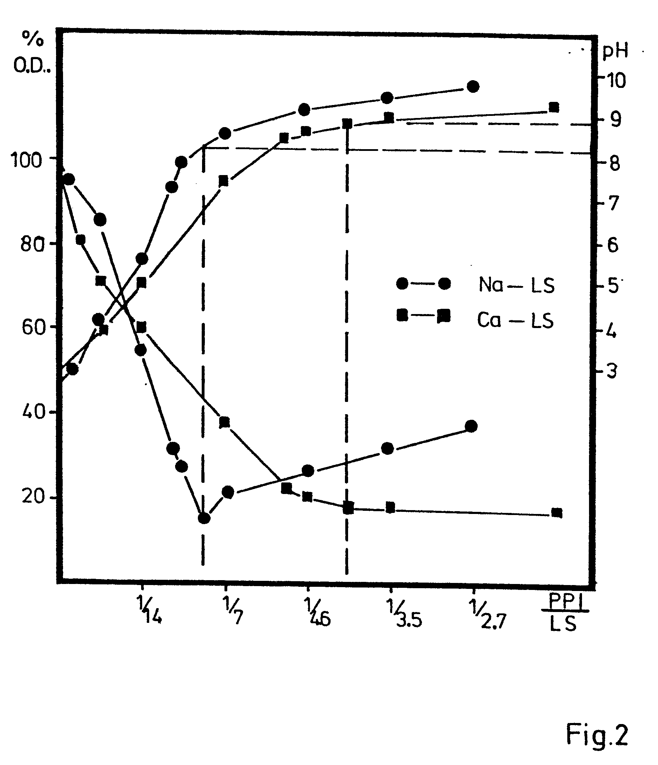

Die Ergebnisse der Messungen sind in Fig. 2 wiedergegeben, die die Fällung von Na-LS und Ca-LS (5%) mit Polypropylenimin (3,6%) zeigt. In der oberen Kurve sind jeweils die pH-Meßwerte dargestellt. Die untere, abfallende Kurve gibt % Substanz an (bei 280 nm gemessen), die nach der Fällung noch im Überstand (Ü) vorhanden ist.

Die gestrichelten Linien erleichtern das Ablesen des PH im Überstand nach maximaler Ausfällung ( = niedrigster Punkt der Kurve). Daraus geht hervor, daß 8 Gewichtsteile Natriumligninsulfonat von 1 Gewichtsteil Polypropylenimin (PPI) bei einem pH von 8,3 im Überstand gefällt werden. 85% der bei 280 nm absorbierenden Substanz (Ligninsulfonat) wurde ausgefällt. Für die Fällung von Kalzium-Ligninsulfonat ergab sich ein ähnlich günstiges Fällungsverhältnis: bei einem pH von 8,9 des Überstandes wurden 81% des Ligninsulfonates ausgefällt. Das Gewichtsverhältnis PPI : Ca-LS betrug ebenfalls 1 : 8.

Wie ebenfalls aus Fig. 2 ersichtlich, sollte das Polykation nicht im Überschuß angewendet werden, da sich sonst der Niederschlag teilweise wieder auflöst (O. D. im Überstand steigt wieder an).

Die Fällung von Ligninsulfonsäure (LS, 5%) mit Polypropylenimin (PPI, 3,6%) bei verschiedenen Temperaturen geht aus der folgenden Tabelle hervor. Die Werte geben an, wieviel % der bei 280 nm absorbierenden Substanz bei einem bestimmten Gewichtsverhältnis $\frac{PPI}{LS}$ ausgefällt werden.

| T °C | PPI : LS = 1 : x | | | |
|---|---|---|---|---|
| | x = 28 | x = 14 | x = 9 | x = 7 |
| 25 | 27 | 37 | 89 | 85 |
| 37 | 27 | 58 | 83 | 79 |
| 60 | 38 | 66 | 84 | 85 |
| 80 | 55 | 78 | 89 | 86 |

Aus der Tabelle geht hervor, daß eine Temperaturerhöhung bis auf 80°C die Fällung nicht ungünstig beeinflußt: Je höher die Temperatur während der Fällung, um so weniger PPI wird zur Symplexbildung benötigt.

### 2. Rückgewinnung des Fällungsmittels aus dem Niederschlag (PPI-LS-Symplex)

1 Teil PPI-LS-Symplex wurde in 1 Teil 1n NaOH bei Raumtemperatur unter Schütteln gelöst. (Die Löslichkeit des Niederschlages in NaOH, bezogen auf atro Symplex, ist folgendermaßen: atro Symplex : 1 n NaOH = 1 : 2,5). Aus dieser Lösung wurde PPI durch 3maliges Ausschütteln mit dem gleichen Volumen Dichlorbenzol oder Dichlormethan, anschließendes Eindampfen zur Trockne und Wiederaufnehmen in 1 Teil Wasser zurückgewonnen, so daß mit dieser Lösung erneut Ligninsulfonat ausgefällt werden konnte.

**Patentansprüche**

1. Verfahren zur Ausfällung von Ligninsulfonaten aus Sulfitablaugen, indem durch Zugabe von Polykationen ein Fällungskomplex entsteht, dadurch gekennzeichnet, daß man als Polykationen Polyimine mit einer geringeren Polarität als Polyäthylenimine einsetzt, den so erhaltenen Fällungskomplex in Alkali löst und das Polyimin durch Extraktion mit organischen Lösungsmitteln zurückgewinnt.

2. Verfahren nach Anspruch 1, dadurch gekennzeichnet, daß als Polyamine Polypropylenimin und/oder höhere homologe Polyimine eingesetzt werden.

3. Verfahren nach Anspruch 1 und 2, dadurch gekennzeichnet, daß das Polyimin nicht im Überschuß eingesetzt wird.

4. Verfahren nach Anspruch 1 bis 3, dadurch gekennzeichnet, daß der Niederschlag in alkalischen, wäßrigen Lösungen, z. B. in Natronlauge, Kaliumhydroxyd, Kalziumhydroxyd, aufgelöst wird.

5. Verfahren nach Anspruch 1 bis 4, dadurch gekennzeichnet, daß die alkalische Lösung mit einem organischen Lösungsmittel nach dem Prinzip der Flüssig-Flüssig-Extraktion extrahiert wird und dabei das Polyimin in die organische Phase, das Ligninsulfonat in die wäßrige Phase eintritt.

6. Verfahren nach Anspruch 5, dadurch gekennzeichnet, daß als organische Lösungsmittel z. B. Chloroform, Dichlormethan, Dichlorbenzol, eingesetzt werden.

7. Verfahren nach Anspruch 1 bis 6, dadurch gekennzeichnet, daß das in organischem Lösungsmittel gelöste Polyimin durch Verdampfen des Lösungsmittels zurückgewonnen wird.

8. Verfahren nach Anspruch 1 bis 6, dadurch gekennzeichnet, daß das in organischem Lösungsmittel gelöste Polyimin durch Extraktion nach dem Prinzip der Flüssig-Flüssig-Extraktion mit einer sauren, wäßrigen Lösung zurückgewonnen wird.

9. Verfahren nach Anspruch 1 oder 8, dadurch gekennzeichnet, daß das Polyimin in wäßriger Lösung zur Fällung eingesetzt wird.

10. Verfahren nach Anspruch 1 bis 3, dadurch gekennzeichnet, daß der Überstand über dem Fällungskomplex zur Verhefung, Vergärung oder Erzeugung von Einzelproteinen eingesetzt wird.

**Claims**

1. Process for the precipitation of lignin-sulphonates from sulphite waste liquors by formation of a precipitation complex by addition of polycations, characterised in that polyimines with a lower polarity than polyethyleneimines are used as the polycations, the precipitation complex thus obtained is dissolved in alkali and the polyimine is recovered by extraction with organic solvents.

2. Process according to Claim 1, characterised in that polypropyleneimine and/or higher homologous polyimines are used as the polyimines.

3. Process according to Claim 1 and 2, characterised in that the polyimine is not employed in excess.

4. Process according to Claims 1 to 3, characterised in that the precipitate is dissolved in alkaline aqueous solutions, for example in sodium hydroxide solution, potassium hydroxide or calcium hydroxide.

5. Process according to Claims 1 to 4, characterised in that the alkaline solution is extracted with an organic solvent by the liquid/liquid extraction principle, and the polyimine thereby enters the organic phase and the lignin-sulphonate enters the aqueous phase.

6. Process according to Claim 5, characterised in that the organic solvents used are, for example, chloroform, methylene chloride and dichlorobenzene.

7. Process according to Claims 1 to 6, characterised in that the polyimine dissolved in the organic solvent is recovered by evaporating off the solvent.

8. Process according to Claims 1 to 6, characterised in that the polyimine dissolved in the organic solvent is recovered by extraction by the liquid/liquid extraction principle using an acid, aqueous solution.

9. Process according to Claim 1 or 8, characterised in that the polyimine is used in aqueous solution for the precipitation.

10. Process according to Claims 1 to 3, characterised in that the supernatant liquor above the precipitation complex is used for yeasting, fermentation or production of individual proteins.

**Revendications**

1. Procédé de précipitation de sulfonates de lignine à partir de lessives sulfitiques, dans lequel par addition de polycations, il se forme un complexe de précipitation, caractérisé en ce qu'on utilise comme polycations des polyimines ayant une polarité plus faible que lespolyéthylèneimines, en ce qu'on dissout le complexe de précipitation ainsi obtenu dans un alcali, et en ce qu'on récupère la polyimine par extraction avec des solvants organiques.

2. Procédé selon la revendication 1, caractérisé en ce qu'on utilise comme polyimines la polypropylèneimine et/ou des polyimines supérieures homologues.

3. Procédé selon l'une quelconque des revendications 1 et 2, caractérisé en ce que la polyimine n'est pas utilisée en excès.

4. Procédé selon l'une quelconque des revendications 1 à 3, caractérisé en ce que le précipité est dissous dans des solutions alcalines, aqueuses, par exemple dans la lessive de soude, dans de l'hydroxyde de potassium, dans de l'hydroxyde de calcium.

5. Procédé selon l'une quelconque des revendications 1 à 4, caractérisé en ce que la solution alcaline est extraite avec un solvant organique selon le principe de l'extraction liquide-liquide et en ce que la polyimine pénètre ici dans la phase organique, le sulfonate de lignine dans la phase aqueuse.

6. Procédé selon la revendication 5, caractérisé en ce qu'on utilise comme solvants organiques par exemple du chloroforme, du dichlorométhane, du dichlorobenzène.

7. Procédé selon l'une quelconque des revendications 1 à 6, caractérisé en ce que la polyimine dissoute dans le solvant organique est récupérée par évaporation du solvant.

8. Procédé selon l'une quelconque des revendications 1 à 6, caractérisé en ce que la polyimine dissoute dans le solvant organique est récupérée par extraction selon le principe de l'extraction liquide-liquide, avec une solution acide, aqueuse.

9. Procédé selon l'une quelconque des revendications 1 ou 8, caractérisé en ce que la polyimine est utilisée pour la précipitation en solution aqueuse.

10. Procédé selon l'une quelconque des revendications 1 à 3, caractérisé en ce que le liquide surnageant sur le complexe de précipitation est utilisé pour la fermentation ou pour la production de protéines isolées.

HOLZ

Sulfitaufschluß →

1) 50% Zellulose

+

2) 50% Sulfitablauge:

a) 10—15% LS

b) Kohlenhydrate:

6 7% Zucker
2 5% Säuren
0, 2 0, 3% Furfurol
0, 05% Methanol

+ Polykation →

Recycling

organisches Lösungsmittel

Futterhefe

Verhefung

Vergärung

Aceton Alkohole

3) Überstand pH 7—9

+

4) Ligninsulfonat Polykationkomplex

OH —

Verbrennung

Bindemittel

Energie

5.) 

a) Polykation

+

b) Ligninsulfonat

Vanillin Waschmittel Gerbstoffe Bindemittel etc.

Fig.1

Fig.2